# EUROPEAN PATENT SPECIFICATION

(11) **EP 2 447 034 B1**
(45) Date of publication and mention of the grant of the patent: **12.10.2016**
(21) Application number: 11008588.3
(22) Date of filing: 26.10.2011
(51) Int. Cl.: B29C 45/76

(54) **Injection moulding machine comprising an energy consumption detecting part**
Spritzgiessmaschine mit Energieverbrauchsmesser
Machine de moulage par injection avec détecteur de consommation d'énergie

(30) Priority: 27.10.2010 JP 2010241390
(43) Date of publication of application: 02.05.2012
(73) Proprietor: SUMITOMO HEAVY INDUSTRIES, LTD., Tokyo 141-6025 (JP)
(72) Inventor: Amano, Mitsuaki, Chiba-shi Chiba 263-0001 (JP); Hano, Katsunobu, Chiba-shi Chiba 263-0001 (JP)
(74) Representative: Schmidbauer, Andreas Konrad

(56) References cited:
- EP-A1- 1 020 279
- EP-A1- 1 346 812
- JP-A- 2001 260 193
- JP-A- 2003 340 891
- JP-A- 2007 076 328
- JP-A- 2009 292 155

## Description

### BACKGROUND OF THE INVENTION

### 1. Field of the Invention

The present invention relates to an injection molding machine which monitors of a plasticizing state of resin.

### 2. Description of the Related Art

Conventionally, an injection molding machine which detects a plasticizing time and controls a rotational speed of a feeder screw depending on a difference between the plasticizing time and a predetermined base plasticizing time is known (see JP 1989-171830 A for example). The plasticizing time represents a time that elapses before a plasticizing process is completed after injecting a molding material from a nozzle into a mold. In the plasticizing process, the molding material is plasticized and accumulated in a nozzle part at the tip of an injection cylinder by a rotation of the plasticizing screw, and the plasticizing screw moves back gradually.

In this way, JP 1989-171830 A describes how the injection molding machine is able to improve quality such as appearance, strength, or the like of a molding product by minimizing variation in the plasticizing time.

Also, an injection molding machine which monitors a duty rate per unit time in each of a plurality of band heaters and changes a setting temperature of a lower part of a hopper depending on a difference between the duty rate and a predetermined threshold value is known (see JP 2009-119654 A for example). Each of the plurality of band heaters heats up an injection cylinder and is controlled by feedback regulation depending on an output of a corresponding temperature sensor attached to the injection cylinder.

In this way, JP 2009-119654 A describes how the injection molding machine can achieve a suitable plasticizing process by changing the setting temperature of the lower part of the hopper depending on the duty rate per unit time in each of the plurality of band heaters which varies with different types of resin materials and by achieving temperature of the lower part of the hopper suitable for each of various resin materials.

The injection molding machine described in JP 1989-171830 A tries to reduce the variation in an amount of resin in each of a plurality of shots by estimating an amount of resin in the injection cylinder through monitoring only the plasticizing time. The injection molding machine described in JP 2009-119654 A tries to reduce the variation in state of resin in each of a plurality of shots by estimating the state of resin in the injection cylinder through monitoring only the duty rate per unit time in each of the plurality of band heaters. However, both machines are insufficient for estimating the state of resin in the injection cylinder affected by many other factors such as rotational speed of the plasticizing screw or the like. Thus, both machines are not able to judge molding quality which depends on the state of resin with a high degree of accuracy.

EP 1 346 812 A1 discloses a process and device for an energy oriented optimization of cyclic machine processes. A set and actual machine parameters for each cycle are recorded and the energy input is measured. Energy usage for a cycle and cycle parts is determined by an analyzing unit. Energy usage in different cycles and/or parts of different cycles is compared. The set machine parameters can then be set to the required levels for optimum energy usage. The set and actual machine parameters for each cycle are recorded and the energy input for each cycle and for several cycle parts running in parallel and/or in series is measured. Energy usage for a cycle and cycle parts is determined by an analyzing unit. Energy usage in different cycles and/or parts of different cycles is compared while taking into account the set machine parameters. The set machine parameters can then be set to the required levels for optimum energy usage. Also disclosed is a process equipment comprising: (1) data recorders for the set and actual parameters of a cycle;
(2) meters for measuring cycle or cycle part energy input;
(3) an energy usage analyzing unit; and (4) apparatus for comparison of energy usage in different cycles and/or cycle parts of cycles and control units for setting optimum machine parameters.

JP 2001 260193 A discloses a method for controlling injection molding machine. In order to provide a method for controlling an injection molding machine which can stabilize the torque of a metering motor irrespective of the lot of a resin by controlling the ratio between the melting of the resin by shearing heat and the melting by the heat of a heater, the torque model of the metering motor is obtained in advance when conforming articles are obtained. A controller, in actual molding, controls a current passage control part to make the torque of the motor approach the torque model, and the control part, when the actual torque of the motor is larger than the torque model, controls a heating cylinder to increase its temperature. When the actual torque of the motor is smaller than the torque model, the cylinder is controlled to decrease its temperature.

JP 2007 076328 A discloses a molding machine and plasticization condition monitoring method. In order to provide a molding machine that can detect the amount of energy given to a resin with sufficient accuracy and control the melting condition of a resin with sufficient accuracy, a resin is plasticized by rotating a screw in a heating cylinder in a molding machine that produces a molded component using a melted resin. The amount of energy given to a resin is calculated based on driven condition of a metering motor that actuates a screw. Calculation of the amount of energy is carried out based on torque added to the screw by the metering motor and rotating speed of the screw by using a condition estimator.

### SUMMARY OF THE INVENTION

In consideration of the above, the present invention is intended to provide an injection molding machine which is able to monitor a plasticizing state of resin with a higher degree of accuracy.

To meet the above objective, an injection molding machine according to an embodiment of the present invention is provided as set forth in claim 1. Preferred embodiments of the present invention may be gathered from the dependent claims.

According to the above, the present invention can provide an injection molding machine which is able to monitor a plasticizing state of resin with a higher degree of accuracy.

### BRIEF DESCRIPTION OF THE DRAWINGS

FIG. 1 is a diagram illustrating a configuration example of a plasticizing state monitor device mounted on an injection molding machine.
FIG. 2 is a schematic view of an injection/plasticizing device in the injection molding machine.
FIG. 3 is a flowchart illustrating a flow of a plasticizing state monitoring process.
FIG. 4 is a diagram illustrating a configuration example of a molding quality judge device mounted on the injection molding machine according to an embodiment of the present invention.
FIG. 5 is a flowchart illustrating a flow of a defective molding product generation noticing process.
FIG. 6 is a flowchart illustrating a flow of a defective molding product generation reducing process.

### DETAILED DESCRIPTION OF THE PREFERRED EMBODIMENT

With reference to the figures, embodiments of the present invention are described in the following.

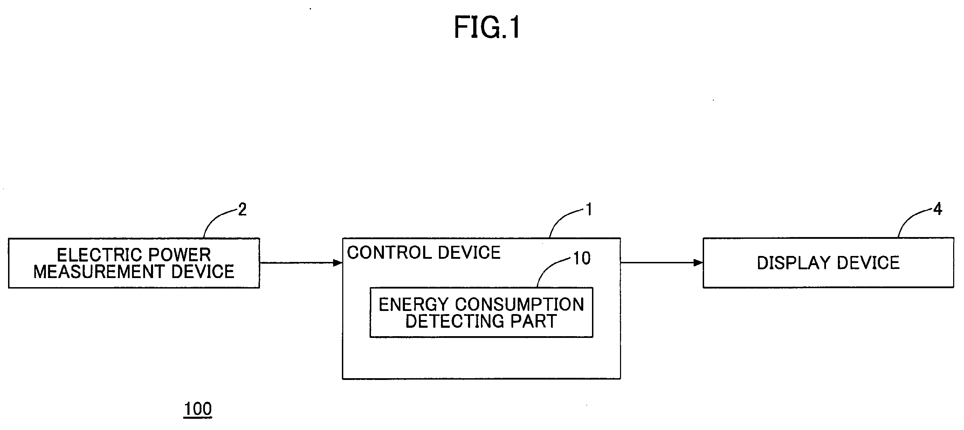

FIG. 1 is a diagram illustrating a configuration example of a plasticizing state monitor device 100 mounted on an injection molding machine. The plasticizing state monitor device 100 monitors changes in an amount of energy consumed during plasticizing resin and displays on a display device the information about the consumed energy as information about a plasticizing state.

Specifically, a control device 1 of the plasticizing state monitor device 100 receives measurement results from an electric power measurement device 2 and outputs a variety of information based on the measurement results to the display device 4.

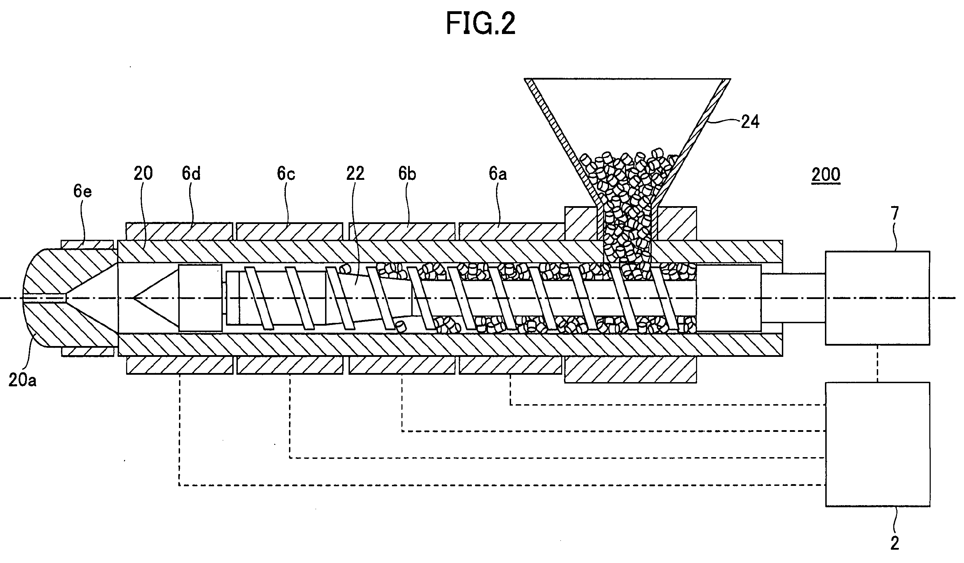

FIG. 2 is a schematic view of an injection/plasticizing device 200 in the injection molding machine. The injection/plasticizing device 200 mainly includes cylinder heaters 6, a plasticizing motor 7, an injection cylinder 20, a plasticizing screw 22, and a hopper 24. For example, the cylinder heaters 6 are divided into five parts 6a-6e which heat up each of five regions of the injection cylinder 20. The detail will be discussed below.

The control device 1 is a computer having a CPU (Central Processing Unit), a RAM (Random Access Memory), a ROM (Read Only Memory), etc. For example, the control device 1 reads out a program corresponding to an energy consumption detecting part 10 from the ROM, loads the program into the RAM, and then causes the CPU to execute a process corresponding to the energy consumption detecting part 10.

The electric power measurement device 2 measures power consumption. For example, the electric power measurement device 2 measures an amount of electric power (kWh) consumed at the cylinder heaters 6 during a single cycle as an amount of electric power consumed during plasticizing resin.

Also, the electric power measurement device 2 may measure an amount of electric power consumed at a part of the cylinder heaters 6 (for example, cylinder heaters 6a-6d except for a cylinder heater 6e) during a single cycle as an amount of electric power consumed during plasticizing resin.

Also, the electric power measurement device 2 may measure a sum of an amount of electric power consumed at the plasticizing motor 7 for rotating the plasticizing motor 7 (i.e., the plasticizing screw 22) during plasticizing process and an amount of electric power consumed at the cylinder heaters 6 during a single cycle as an amount of electric power consumed during plasticizing resin.

The display device 4 displays a variety of information. For example, the display device 4 includes a display attached to a molding machine body, a display located outside of the injection molding machine, or the like. The display device 4 displays a variety of information such as electric power consumption at the injection/plasticizing device 200, in response to a control signal transmitted from the control device 1.

The cylinder heaters 6 heat up the injection cylinder 20. For example, the cylinder heaters 6 include a first cylinder heater 6a which heats up a first cylinder region closest to the hopper 24, a second cylinder heater 6b which heats up a second cylinder region adjacent to the first cylinder region in a direction away from the hopper 24, a third cylinder heater 6c which heats up a third cylinder region adjacent to the second cylinder region in a direction away from the hopper 24, a fourth cylinder heater 6d which heats up a fourth cylinder region closest to a nozzle part 20a, and a fifth cylinder heater 6e which heats up the nozzle part 20a. A target temperature corresponding to each of the cylinder heaters 6a-6e is set. The cylinder heater 6 heats up each region of the injection cylinder 20 to the respective target temperature while receiving electric power from a commercial power source (not shown).

The target temperature is predetermined so that an adequate quality molding product is produced from given resin material. The target temperature is derived empirically for each resin material or derived based on a predetermined calculation formula considering specific heat or the like of resin material.

Each of the cylinder heaters 6a-6e is also provides with a temperature sensor (not shown) which measures temperature of a corresponding cylinder region. Each of the cylinder heaters 6a-6e is controlled by feedback regulation while being switched on and off automatically depending on an output of the temperature sensor so that the temperature of the corresponding cylinder region reaches the target temperature.

The plasticizing motor 7 controls rotation of the plasticizing screw 22. For example, the plasticizing motor 7 rotates the plasticizing screw 22 at a target rotational speed in order to melt resin material supplied from the hopper 24 into the injection cylinder 20 and feed it toward the nozzle part 20a. Also, the plasticizing motor 7 locks the rotation of the plasticizing screw 22 when an injection motor (not shown) moves the plasticizing screw 22 axially.

The target rotational speed of the plasticizing screw 22 is predetermined so that an adequate quality molding product is produced from given resin material. The target rotational speed is derived empirically for each resin material or derived based on a predetermined calculation formula considering specific heat or the like of resin material. Preferably, the target rotational speed is set to create a starved plasticizing state.

The plasticizing motor 7 is provided with an encoder (not shown) which detects a rotational speed of its drive axis coupled to the plasticizing screw 22. The plasticizing motor 7 is controlled by feedback regulation so that the rotational speed of the plasticizing screw 22 reaches the target rotational speed while adjusting drive torque automatically depending on an output of the encoder.

The energy consumption detecting part 10 is a functional element configured to detect an amount of energy consumed in plasticizing resin as a plasticizing monitor value. For example, the energy consumption detecting part 10 detects electric energy (kWh) consumed at the injection/plasticizing device 200 during plasticizing resin, records the detected value in the RAM, and outputs the detected value to the display device 4.

An amount of energy consumed in plasticizing resin, which is detected as the plasticizing monitor value, may be for example an amount of energy consumed in a single cycle, or an amount of energy consumed in a predetermined process (e.g., a plasticizing process), or the like. In this way, for detecting the amount of energy consumed in plasticizing resin, the measurement period or the measuring object (e.g., the plasticizing motor 7) can be selected and configured arbitrarily.

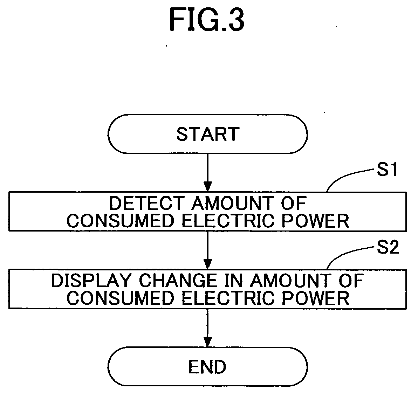

Next, referring to FIG. 3, a process where the plasticizing state monitor device 100 monitors a plasticizing state (hereinafter referred to as a "plasticizing state monitoring process") will be described. FIG. 3 is a flowchart illustrating a flow of the plasticizing state monitoring process. The plasticizing state monitor device 100 is supposed to execute the plasticizing state monitoring process repeatedly at a predetermined frequency (e.g., for each cycle).

Firstly, the control device 1 of the plasticizing state monitor device 100 detects, by the energy consumption detecting part 10, an amount of electric power consumed at the injection/plasticizing device 200 during plasticizing resin based on an output of the electric power measurement device 2 (step S1).

Then, the control device 1 records the detected value of the amount of consumed electric power in the RAM and displays changes in the amount of consumed electric power on the display device 4 (step S2).

Specifically, the control device 1 displays on the display device 4 the value of the amount of electric power consumed during plasticizing resin in each cycle of the past and the present, in the form of a chart with a vertical axis which represents the amount of consumed electric power and a horizontal axis which represents time axis.

Alternatively, the control device 1 may display, in tabular form, each value of the amount of electric power consumed during plasticizing resin in the predetermined number of the latest cycles.

The control device 1 may also display on the screen of the display device 4 a statistical value (e.g., a maximum value, a minimum value, an average value, a standard deviation, or the like) of the amounts of consumed electric power in cycles performed within a predetermined period of time. The control device 1 may also extract from the amounts of consumed electric power in cycles performed within the predetermined period of time an amount of consumed electric power deviating from a predetermined numerical range. Then, the control device 1 may display on the screen of the display device 4 an ID number, a molding time, or the like of the cycle corresponding to the extracted amount of consumed electric power.

The control device 1 displays information including a value of currently detected amounts of consumed electric power on the screen of the display device 4 in real time. However, the control device 1 may also display information about the amount of consumed electric power on the screen of the display device 4 in response to a user's demand via an input device (not shown).

With the above described configuration, the injection molding machine can monitor a plasticizing state of resin with a higher degree of accuracy by monitoring the amount of electric power consumed at the injection/plasticizing device 200 during plasticizing resin, which is susceptible to change in a plasticizing state of resin.

The injection molding machine may monitor a plasticizing state of resin with a higher degree of accuracy by monitoring energy consumption other than the amount of consumed electric power. The injection molding machine may also monitor a plasticizing state of resin with a higher degree of accuracy by monitoring the amount of consumed electric power or other energy consumptions in other units than kWh.

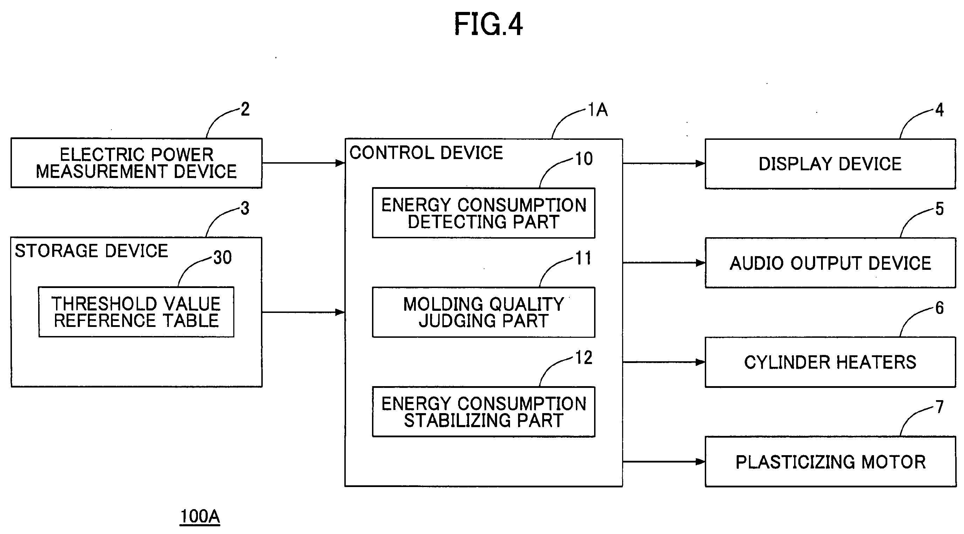

Next, referring to FIG. 4, a molding quality judge device 100A mounted on an injection molding machine according to the embodiment of the present invention will be described. FIG. 4 is a diagram illustrating a configuration example of the molding quality judge device 100A mounted on the injection molding machine according to the embodiment of the present invention. In the embodiment, the molding quality judge device 100A monitors an amount of energy consumed during plasticizing resin and judges quality of a molding product based on the monitored value of the energy consumption.

The molding quality judge device 100A is different from the plasticizing state monitoring device 100 in the respect that the molding quality judge device 100A is provided with a molding quality judging part 11 and an energy consumption stabilizing part 12 in its control device 1A, references information stored in a storage device 3, and outputs a control signal to an audio output device 5, the cylinder heaters 6, and the plasticizing motor 7. However, other respects are common to the molding quality judge device 100A and the plasticizing state monitoring device 100.

Thus, while using common reference numbers for common components and while omitting the explanation of the common points, the different points will be described below in detail.

Specifically, the control device 1A of the molding quality judge device 100A receives a measurement result from the electric power measurement device 2 and references the information stored in the storage device 3. The control device 1A executes a variety of calculations and judges molding quality. Then, the control device 1A outputs the judged result to the display device 4 or the audio output device 5, and controls the cylinder heaters 6 or the plasticizing motor 7 based on the judged result.

The control device 1A is a computer having a CPU, a RAM, a ROM, or the like. For example, the control device 1A reads out a program corresponding to each of functional elements such as the energy consumption detecting part 10, the molding quality judging part 11, and the energy consumption stabilizing part 12 from the ROM, loads the program into the RAM, and then causes the CPU to execute a process corresponding to each of the functional elements.

The storage device 3 stores a variety of information. For example, the storage device 3 is a nonvolatile storage medium such as a hard disk, a semiconductor memory, or the like. The storage device 3 stores a threshold value reference table 30 referenceably storing an amount of base electric power corresponding to each of a variety of resin materials which differ in quality of material or an amount of mixed additive agent.

The "amount of base electric power" represents a typical amount of electric power consumed in producing an adequate quality molding product from given resin material. The amount of base electric power is derived empirically for each resin material or derived based on a predetermined calculation formula considering specific heat or the like of resin material.

The amount of base electric power is also set as a typical value of an amount of consumed electric power at the injection/plasticizing device 200. However, the amount of base electric power may be set as a typical value of an amount of electric power consumed at each of components of the injection/plasticizing device 200 such as the cylinder heaters 6 or the plasticizing motor 7, or as a sum of values of the respective components.

In that case, the amount of base electric power for the cylinder heaters 6 may be set as a typical value of an amount of electric power consumed at the cylinder heaters 6 during a single cycle. And the amount of base electric power for the plasticizing motor 7 may be set as a typical value of an amount of electric power consumed at the plasticizing motor 7 during plasticizing process.

The audio output device 5 outputs a variety of information audibly. For example, the audio output device 5 includes a speaker, a buzzer, or the like attached to the molding machine body. The audio output device 5 audibly outputs information indicating that a defective molding product has been generated, that measures for preventing a defective molding product from being generated has been taken, or the like, in response to a control signal transmitted from the control device 1A.

Next, details of the respective functional elements of the control device 1A will be described.

The molding quality judging part 11 is configured to judge quality of molding products manufactured by using a plasticized resin material based on an amount of energy consumed at the injection/plasticizing device 200 during plasticizing the resin material.

Specifically, the molding quality judging part 11 compares the amount of electric energy consumed at the injection/plasticizing device 200 during plasticizing resin (an amount of consumed electric power) detected by the energy consumption detecting part 10 and the amount of base electric power preliminarily stored in the storage device 3. If the difference (an absolute value) between the amount of consumed electric power and the amount of base electric power is more than or equal to a predetermined value, the molding quality judging part 11 judges that there is a problem with quality of related molding products (e.g., generation of a short shot due to undersupply of resin material, a black dot, or a burn, or generation of a burr due to oversupply of resin material).

The molding quality judging part 11 may estimate a plasticizing state (e.g., viscosity, density, etc.) of resin material based on the amount of consumed electric power detected by the energy consumption detecting part 10, and judge quality of molding products manufactured by using the resin material based on whether the estimated plasticizing state belongs to a plasticizing state which the then molding condition (e.g., a preset temperature of each region of the injection cylinder 20 or a preset rotational speed of the plasticizing screw 22) tolerates.

Specifically, the molding quality judging part 11 derives viscosity of used resin material based on the amount of consumed electric power detected by the energy consumption detecting part 10 and a correspondence table of the amount of consumed electric power to the resin viscosity (not shown) preliminarily stored in the storage device 3. Then, the molding quality judging part 11 judges quality of molding products manufactured by using the resin material based on whether the derived viscosity falls within a viscosity range tolerated by the then molding condition.

The viscosity of the resin material changes depending on an amount of additive agent mixed in the resin material. For example, due to plasticizer effect, the viscosity of the resin material decreases with an increase of the amount of additive agent. This is because an inappropriate amount of the additive agent does not match the molding condition and tends to cause an inadequate molding (e.g., a black dot or a burn).

Values stored in the correspondence table of the amount of consumed electric power to the resin viscosity are calculated and configured based on relationship between resin viscosity and injection pressure derived by applying principle of capillary rheometer to the injection molding machine during purge action (the action for washing out the resin in the injection cylinder). This is because it is impossible to apply the principle of the capillary rheometer to injection pressure during molding process due to the fact the injection pressure during molding process is affected by flow resistance at a runner or a gate, and because it is impossible to derive the then resin viscosity.

In this way, the electric power consumed at the cylinder heaters 6 and the plasticizing motor 7 decreases if resin viscosity during plasticizing resin is low. Thus, the molding quality judging part 11 judges whether there is a problem with quality of molding products manufactured by using the resin material by estimating the decrease of resin viscosity through detecting the decrease of the amount of consumed electric power and then by estimating that the amount of mixed additive agent does not match the molding condition.

The energy consumption stabilizing part 12 is configured to stabilize an amount of energy consumed at the injection/plasticizing device 200. For example, the energy consumption stabilizing part 12 changes a content of a control signal to be transmitted to the cylinder heaters 6 or the plasticizing motor 7 depending on the electric energy (the amount of electric power) consumed at the injection/plasticizing device 200 during plasticizing resin in a single cycle, which is detected by the energy consumption detecting part 10, so that the difference between electric energy (an amount of electric power) to be consumed at the injection/plasticizing device 200 during plasticizing resin in a subsequent cycle and the amount of base electric power preliminarily stored in the storage device 3 becomes less than a predetermined value.

Specifically, the energy consumption stabilizing part 12 outputs a control signal to the cylinder heaters 6 in order to lower a target temperature for the cylinder heaters 6 if it detects that a total amount of electric power consumed at the injection/plasticizing device 200 during plasticizing resin in a single cycle remains at a level higher than the amount of base electric power and that an amount of electric power consumed at the cylinder heaters 6 remains at a level higher than the amount of base electric power concerning the cylinder heaters 6. This is to bring the total amount of electric power consumed at the injection/plasticizing device 200 close to the amount of base electric power by reducing an amount of electric power to be consumed at the cylinder heaters 6 in a subsequent cycle.

Also, the energy consumption stabilizing part 12 outputs a control signal to the plasticizing motor 7 in order to lower a target rotational speed for the plasticizing motor 7 if it detects that a total amount of electric power consumed at the injection/plasticizing device 200 during plasticizing resin in a single cycle remains at a level higher than the amount of base electric power and that an amount of electric power consumed at the plasticizing motor 7 during plasticizing process remains at a level higher than the amount of base electric power concerning the plasticizing motor 7. This is to bring the total amount of electric power consumed at the injection/plasticizing device 200 close to the amount of base electric power by reducing an amount of electric power to be consumed at the plasticizing motor 7 during plasticizing process in a subsequent cycle.

The energy consumption stabilizing part 12 may lower the target rotational speed for the plasticizing motor 7 without lowering the target temperature for the cylinder heaters 6 (moreover, while increasing the target temperature for the cylinder heaters 6) even if it detects that the total amount of electric power consumed at the injection/plasticizing device 200 during plasticizing resin in a single cycle remains at a level higher than the amount of base electric power and that the amount of electric power consumed at the cylinder heaters 6 remains at a level higher than the amount of base electric power concerning the cylinder heaters 6.

Similarly, the energy consumption stabilizing part 12 may lower the target temperature for the cylinder heaters 6 without lowering the target rotational speed for the plasticizing motor 7 (moreover, while increasing the target rotational speed for the plasticizing motor 7) even if it detects that the total amount of electric power consumed at the injection/plasticizing device 200 during plasticizing resin in a single cycle remains at a level higher than the amount of base electric power and that the amount of electric power consumed at the plasticizing motor 7 during plasticizing process remains at a level higher than the amount of base electric power concerning the plasticizing motor 7.

This is because the amount of electric power consumed at the injection/plasticizing device 200 decreases as a whole if a decrement of the amount of electric power consumed at the plasticizing motor 7 exceeds an increment of the amount of electric power consumed at the cylinder heaters 6, or if a decrement of the amount of electric power consumed at the cylinder heaters 6 exceeds an increment of the amount of electric power consumed at the plasticizing motor 7. This is because the control regulation can bring the amount of consumed electric power remaining at a high level close to the amount of base electric power.

The above described control regulation by the energy consumption stabilizing part 12 is applied to a case where the total amount of electric power consumed at the injection/plasticizing device 200 remains at a higher level than the amount of base electric power. However, the control regulation can also be applied to a case where the total amount of electric power consumed at the injection/plasticizing device 200 remains at a lower level than the amount of base electric power, by reversing a direction of the control regulation. The reversing means an increase of the target temperature for the cylinder heaters 6 or the target rotational speed for the plasticizing motor 7 for increasing the amount of consumed electric power.

In this way, the energy consumption stabilizing part 12 can reduce generation of a defective molding product by stabilizing the amount of electric power consumed at the injection/plasticizing device 200.

This is because variation in the amount of consumed electric power can be recognized as an indicator of variation in resin viscosity and then as an indicator of variation in the amount of mixed additive agent. And this is because, despite the fact that the amount of consumed electric power has changed, continuing use of the same molding condition (the molding condition which conforms not to the amount of consumed electric power after the change but to the amount of consumed electric power before the change) as before causes a problem resulting from mismatching between the amount of mixed additive agent and the molding condition.

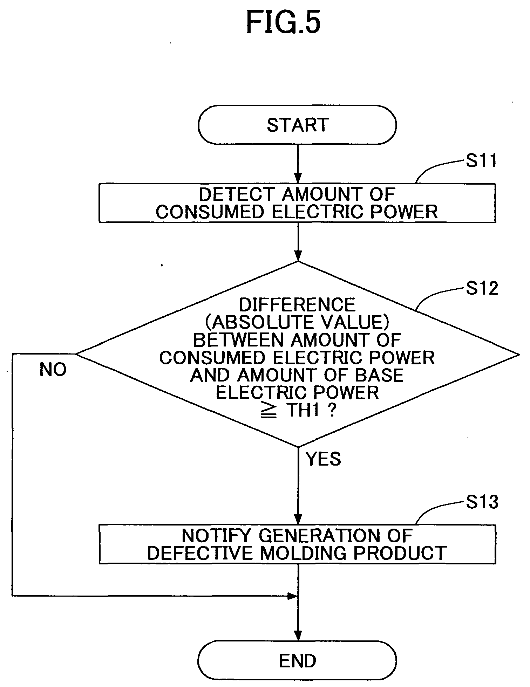

Next, referring to FIG. 5, a process where the molding quality judge device 100A notifies an operator of generation of a defective molding product (hereinafter referred to as "defective molding product generation noticing process") will be described. FIG. 5 is a flowchart illustrating a flow of the defective molding product generation noticing process. The molding quality judge device 100A is supposed to execute the defective molding product generation noticing process repeatedly at a predetermined frequency (e.g., for each cycle).

Firstly, the control device 1A of the molding quality judge device 100A detects by using the energy consumption detecting part 10 the amount of electric power consumed at the injection/plasticizing device 200 during plasticizing resin based on an output of the electric power measurement device 2 (step S11).

Next, the control device 1A determines by using the molding quality judging part 11 whether the difference (an absolute value) between the amount of consumed electric power detected by the energy consumption detecting part 10 and the amount of base electric power preliminarily stored in the storage device 3 is more than or equal to a predetermined value TH1 (step S12).

If the control device 1A determines that the difference is more than or equal to the threshold value TH1 (YES in step S12), the control device 1A outputs a control signal to the display device 4 and the audio output device 5 so that the display device 4 displays a text message indicating that there is a possibility that a defective molding product has been manufactured, or the audio output device 5 audibly outputs a voice message indicating the same (step S13).

If the control device 1A determines that the difference is less than the threshold value TH1 (NO in step S12), the control device 1A completes this turn of the defective molding product generation noticing process without notifying the operator the possibility of generation of a defective molding product.

The control device 1A may judge the possibility of generation of a defective molding product based on a range of resin viscosities which are preconfigured depending on the then molding condition and resin viscosity derived from the amount of consumed electric power, instead of judging the possibility of generation of a defective molding product based on the difference between the amount of consumed electric power and the amount of base electric power.

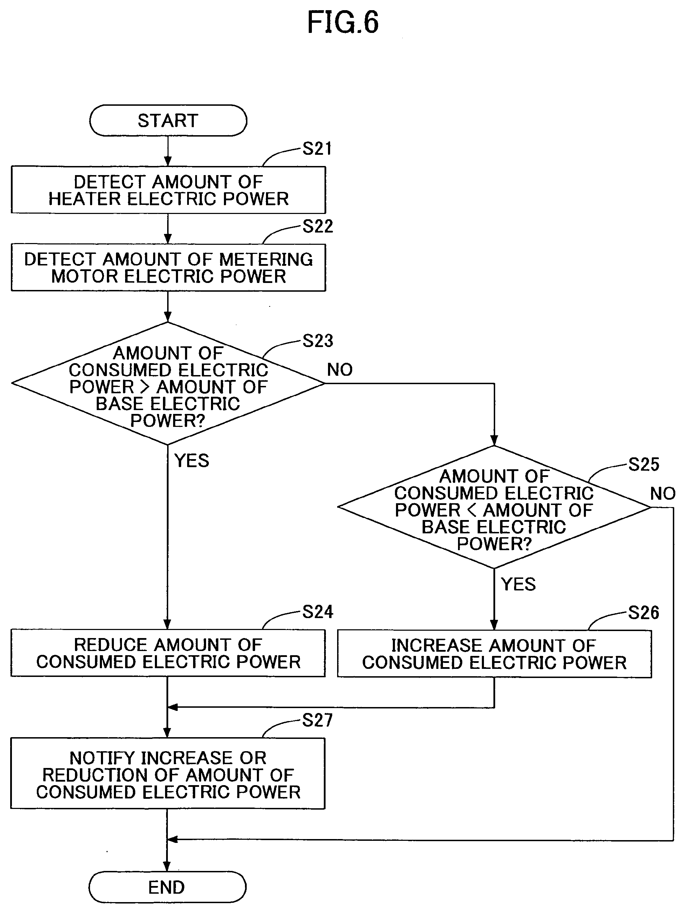

Next, referring to FIG. 6, a process where the molding quality judge device 100A proactively reduces the generation of a defective molding product (hereinafter referred to as "defective molding product generation reducing process") will be described. FIG. 6 is a flowchart illustrating the defective molding product generation reducing process. The molding quality judge device 100A is supposed to execute the defective molding product generation reducing process repeatedly at a predetermined frequency (e.g., for each cycle).

Firstly, the control device 1A of the molding quality judge device 100A uses the energy consumption detecting part 10 to detect the amount of electric power (the amount of heater electric power) consumed at the cylinder heaters 6 in a latest single cycle, based on an output of the electric power measurement device 2 (step S21).

The control device 1A also uses the energy consumption detecting part 10 to detect the amount of electric power (the amount of plasticizing motor electric power) consumed at the plasticizing motor 7 during plasticizing process based on an output of the electric power measurement device 2 (step S22).

The detection of the amount of heater electric power may be performed after the detection of the amount of plasticizing motor electric power, or may be performed simultaneously with the detection of the amount of plasticizing motor electric power.

Next, by using the molding quality judging part 11, the control device 1A compares the total amount of consumed electric power and the amount of base electric power corresponding to the then molding condition (e.g., a preset temperature for each region of the injection cylinder 20 or a preset rotational speed for the plasticizing screw 22) and determines whether the total amount of consumed electric power is more than the amount of base electric power (step S23). The total amount of consumed electric power is a sum of the amount of electric power consumed at the cylinder heaters 6 and the amount of electric power consumed at the plasticizing motor 7.

If the control device 1A determines that the total amount of consumed electric power is more than the amount of base electric power (YES in step S23), by using the energy consumption stabilizing part 12, the control device 1A reduces a total amount of electric power to be consumed in a subsequent cycle to be close to the amount of base electric power by lowering the target temperature for the cylinder heaters 6 or by lowering the target rotational speed for the plasticizing motor 7 (step S24).

In contrast, if the control device 1A determines that the total amount of consumed electric power is less than or equal to the amount of base electric power (NO in step S23), the control device 1A determines whether the total amount of consumed electric power is less than the amount of base electric power (step S25).

If the control device 1A determines that the total amount of consumed electric power is less than the amount of base electric power (YES in step S25), by using the energy consumption stabilizing part 12, the control device 1A increases a total amount of electric power to be consumed in a subsequent cycle to be close to the amount of base electric power by increasing the target temperature for the cylinder heaters 6 or by increasing the target rotational speed for the plasticizing motor 7 (step S26).

If the control device 1A determines that the total amount of consumed electric power is equal to the amount of base electric power (NO in step S25), the control device 1A completes this turn of the defective molding product generation reducing process without taking a measure to change the total amount of consumed electric power.

If the measure to change the total amount of consumed electric power has been taken (after step S24 or step S26), the control device 1A outputs a control signal to the display device 4 and the audio output device 5 so that the display device 4 displays a text message indicating that the measure for preventing generation of a defective molding product has been taken, or the audio output device 5 audibly outputs a voice message indicating the same (step S27).

The control device 1A may determine whether or not to take the measure for preventing generation of a defective molding product based on a range of resin viscosity preconfigured depending on the then molding condition and resin viscosity derived from the amount of consumed electric power, instead of determining whether or not to take the measure for preventing generation of defective molding product based on the difference between the amount of consumed electric power and the amount of base electric power.

With the above described configuration, the injection molding machine according to the embodiment of the present invention monitors the amount of electric power consumed at the injection/plasticizing device 200 during plasticizing resin, which is susceptible to the change in a plasticizing state of resin. Thus, the injection molding machine is able to monitor a plasticizing state of resin with a higher degree of accuracy and then judge molding quality which depends on change in a plasticizing state of resin with a high degree of accuracy based on a value of change in a plasticizing state of resin.

Also, the injection molding machine according to one or more embodiments of the present invention monitors the amount of electric power consumed at the injection/plasticizing device 200 during plasticizing resin. Thus, the injection molding machine is able to monitor viscosity of resin in the injection cylinder 20, which is susceptible to the amount of mixed additive agent in resin material, with a higher degree of accuracy

Moreover, the injection molding machine according to one or more embodiments may monitor energy consumption other than the amount of consumed electric power. Thus, the injection molding machine may monitor a plasticizing state of resin with a higher degree of accuracy and then judge molding quality dependent upon change in a plasticizing state of resin with a higher degree of accuracy based on a value of the change in a plasticizing state of resin. And the injection molding machine may monitor the amount of consumed electric power or other energy consumption in other units than kWh and then judge molding quality dependent upon change in a plasticizing state of resin with a higher degree of accuracy based on a value of the change in a plasticizing state of resin.

Furthermore, the injection molding machine according to the embodiment of the present invention monitors viscosity of resin in the injection cylinder 20 which is susceptible to the amount of mixed additive agent in resin material. Thus, the injection molding machine is able to judge molding quality dependent upon change in the amount of mixed additive agent with a higher degree of accuracy.

Furthermore, the injection molding machine according to an embodiment brings the amount of electric power consumed at the injection/plasticizing device 200 during plasticizing resin, which is susceptible to change in a plasticizing state of resin, close to a predetermined amount of base electric power. Thus, the injection molding machine is able to reduce generation of a defective molding product due to the change in a plasticizing state of resin.

Although the detail of the preferred embodiments of the present invention has been described, the present invention is not intended to be limited to the above described embodiments. It is possible to apply a variety of modifications or substitutions to the above described embodiments without departing from the scope of the present invention as defined by the appended claims.

For example, in the above described embodiments, the injection/plasticizing device 200 supplies resin material directly from the hopper 24 to the injection cylinder 20. However, the injection/plasticizing device 200 may be provided with a feeder which controls an amount of resin to be supplied to the injection cylinder 20. This is because a disturbance to a plasticizing torque or the like is reduced if a starved plasticizing state is stably created. And this is because the reduced disturbance allows detection of change in the amount of consumed electric power linked to change in a plasticizing state of resin with a higher degree of accuracy.

## Claims

1. An injection molding machine configured to monitor a state of resin in an injection cylinder (20), comprising:
an energy consumption detecting part (10) configured to detect an amount of energy consumed in plasticizing the resin, a storage device (3) for storing an amount of base consumed energy, **characterized by**:
a molding quality judging part (11) configured to compare the amount of consumed energy detected by the energy consumption detecting part (10) and an amount of base consumed energy, which is stored in the storage
device (3) and represents a typical amount of energy consumed in producing an adequate quality molding product from a given resin material;
an energy consumption stabilizing part (12) configured to stabilize the consumed energy detected by the energy consumption detecting part (10).

2. The injection molding machine as claimed in claim 1, wherein said molding quality judging part (11) is further configured to judge molding quality by estimating the state of the resin in the injection cylinder (20) based on the amount of consumed energy detected by the energy consumption detecting part (10).

3. The injection molding machine as claimed in claim 2, wherein the molding quality judging part (11) is configured to judge molding quality by estimating viscosity of the resin in the injection cylinder (20) based on the consumed energy detected by the energy consumption detecting part (10).

4. The injection molding machine as claimed in any one of claims 1 to 3, wherein the energy consumption detecting part (10) is configured to detect as the consumed energy an amount of electric power consumed at a heater (6) which heats up the injection cylinder (20), and
an amount of electric power consumed at a plasticizing motor (7) which rotates a plasticizing screw (22).

## Patentansprüche

1. Spritzgussmaschine, die konfiguriert ist, um einen Zustand eines Harzes in einem Einspritzzylinder (20) zu überwachen, welche Folgendes aufweist:
einen Energieverbrauchsdetektionsteil (10), der konfiguriert ist, um eine Energiemenge zu detektieren, die beim Plastizieren des Harzes verbraucht wird,
eine Speichervorrichtung (3) zum Speichern einer Menge von verbrauchter Basisenergie,
**gekennzeichnet durch**
einen Formqualitätsbeurteilungsteil (11), der konfiguriert ist, um die Menge an verbrauchter Energie, die von dem Energieverbrauchsdetektionsteil (10) detektiert wird, und eine Menge der verbrauchten Basisenergie zu vergleichen, die in der Speichervorrichtung (3) gespeichert ist und eine typische Energiemenge darstellt, die beim Herstellen eines Formproduktes von adäquater Qualität aus einem gegebenen Harzmaterial verbraucht wird;
einen Energieverbrauchsstabilisierungsteil (12), der konfiguriert ist, um die verbrauchte Energie zu stabilisieren, die von dem Energieverbrauchsdetektionsteil (10) detektiert wird.

2. Spritzgussmaschine nach Anspruch 1, wobei der Formqualitätsbeurteilungsteil (11) weiter konfiguriert ist, um die Formqualität durch Abschätzen des Zustandes des Harzes in dem Einspritzzylinder (20) basierend auf der Menge der verbrauchten Energie zu beurteilen, die von dem Energieverbrauchsdetektionsteil (10) detektiert wird.

3. Spritzgussmaschine nach Anspruch 2, wobei der Formqualitätsbeurteilungsteil (11) konfiguriert ist, um die Formqualität durch Abschätzen einer Viskosität des Harzes in dem Einspritzzylinder basierend auf der verbrauchten Energie zu beurteilen, die von dem Energieverbrauchsdetektionsteil (10) detektiert wird.

4. Spritzgussmaschine nach einem der Ansprüche 1 bis 3, wobei der Energieverbrauchsdetektionsteil (10) konfiguriert ist, um als die verbrauchte Energie eine Menge an elektrischer Leistung zu detektieren, die bei einer Heizvorrichtung (6) verbraucht wird, welche den Einspritzzylinder (20) aufheizt, und
eine Menge an elektrischer Leistung, die bei einem Plastizierungsmotor (7) verbraucht wird, der eine Plastizierungsschnecke (22) dreht.

## Revendications

1. Machine de moulage par injection agencée pour surveiller l'état d'une résine dans un cylindre d'injection (20), comprenant :
une partie de détection de consommation d'énergie (10) agencée pour détecter une quantité d'énergie consommée dans la plastification de la résine,
un dispositif de mémorisation (3) pour mémoriser une quantité d'énergie consommée de base, **caractérisé par** :
une partie d'évaluation de qualité de moulage (11) agencée pour comparer la quantité d'énergie consommée détectée par la partie de détection de consommation d'énergie (10) et une quantité d'énergie consommée de base, qui est mémorisée dans le dispositif de mémorisation (3) et représente une quantité typique d'énergie consommée pour la production d'un produit de moulage de qualité adéquate à partir d'un matériau de résine donné ;
une partie de stabilisation de consommation d'énergie (12) agencée pour stabiliser l'énergie consommée détectée par la partie de détection de consommation d'énergie (10).

2. Machine de moulage par injection selon la revendication 1, dans laquelle la partie d'évaluation de qualité de moulage (11) est en outre agencée pour évaluer la qualité de moulage en estimant l'état de la résine dans le cylindre d'injection (20) sur la base de la quantité d'énergie consommée détectée par la partie de détection de consommation d'énergie (10).

3. Machine de moulage par injection selon la revendication 2, dans laquelle la partie d'évaluation de qualité de moulage (11) est agencée pour évaluer la qualité de moulage en estimant la viscosité de la résine dans le cylindre d'injection (20) sur la base de l'énergie consommée détectée par la partie de détection de consommation d'énergie (10).

4. Machine de moulage par injection selon l'une quelconque des revendications 1 à 3, dans laquelle la partie de détection de consommation d'énergie (10) est agencée pour détecter comme énergie consommée une quantité d'énergie électrique consommée au niveaud'un dispositif de chauffage (6) qui chauffe le cylindre d'injection (20), et
une quantité d'énergie électrique consommée au niveau d'un moteur de plastification (7) qui fait tourner une vis de plastification (22).
